# EUROPÄISCHE PATENTSCHRIFT

(11) **EP 2 838 153 B1**
(45) Veröffentlichungstag und Bekanntmachung des Hinweises auf die Patenterteilung: **12.07.2017**
(21) Anmeldenummer: 14180438.5
(22) Anmeldetag: 08.08.2014
(51) Int. Cl.: H01M 10/617, H01M 10/625, H01M 10/633, H01M 10/6563, H01M 10/66, H01M 10/48

(54) **Verfahren zum Homogenisieren der Zelltemperaturverteilung einer Lithium-Ionen-Batterie für ein Kraftfahrzeug sowie Lithium-Ionen-Batterie für ein Kraftfahrzeug**
Method for homogenizing the temperature distribution of the cells of a lithium-ion battery for a motor vehicle and lithium ion battery for a motor vehicle
Procédé d'homogénéisation de répartition de température des éléments de batterie lithium ion pour un véhicule automobile et batterie lithium-ion pour un véhicule automobile

(30) Priorität: 14.08.2013 DE 102013216104
(43) Veröffentlichungstag der Anmeldung: 18.02.2015
(73) Patentinhaber: ROBERT BOSCH GMBH, 70442 Stuttgart (DE); Samsung SDI Co., Ltd., Yongin-si Gyeonggi-do 446-577 (KR)
(72) Erfinder: Haug, Karsten, 70372 Stuttgart (DE); Kopp, Benjamin, 71686 Remseck Am Neckar (DE); Loew, Christian, 70195 Stuttgart (DE); Schmidt, Achim, 22087 Hamburg (DE)
(74) Vertreter: Bee, Joachim

(56) Entgegenhaltungen:
- EP-A1- 2 067 640
- EP-A2- 1 786 058
- US-A1- 2004 137 313
- US-A1- 2004 257 089

## Beschreibung

Die vorliegende Erfindung betrifft ein Verfahren nach Anspruch 1 zum Homogenisieren der Temperaturverteilung in den Zellen einer Lithium-Ionen-Batterie für ein Kraftfahrzeug. Ferner ist die Erfindung auch auf eine Lithium-Ionen-Batterie nach Anspruch 7 für ein Kraftfahrzeug gerichtet.

### STAND DER TECHNIK

Um die Sicherheit und Funktion von Lithium-Ionen Batteriepacks zu gewährleisten, ist es erforderlich, die Zellen innerhalb eines vorgegebenen Temperaturbereichs zu betreiben. Während des Betriebs der Zellen entsteht Wärme, wie z.B. Joulesche Wärme, die durch den elektrischen Strom und den inneren Widerstand der Zelle beschrieben werden kann, sowie Wärme aufgrund reversibler Vorgänge in der Zelle. Diese Wärme muss abgeführt werden, um ein Aufheizen der Zellen und damit des Batteriepacks über eine kritische Betriebstemperatur zu vermeiden. Für die Auslegung eines Thermomanagementsystems werden in der Regel Lastzyklen herangezogen, mit denen der Temperaturanstieg innerhalb der Batterie bei bekannten thermischen Randbedingungen vorhergesagt werden kann.

In vielen technischen Anwendungen werden die Zellen beziehungsweise Module eines Batteriepacks über die Zellunterseite entwärmt. Dazu erfolgt beispielsweise eine Modulmontage auf fluiddurchströmten Platten, die abhängig vom Grad der geforderten Kühlleistung mit Wasser/Glykol-Gemischen beziehungsweise verdampfendem Kältemittel beaufschlagt werden. Nachteilig bei diesen Kühlvarianten ist, dass die in der Zelle entstehende Wärme über eine vergleichsweise kleine Fläche, nämlich der Bodenfläche, abgeführt werden muss und die Zellen aufwändig auf eine Kühlplatte montiert werden müssen.

Thermische Kontaktwiderstände zwischen Zelle und Kühlplatte limitieren die Entwärmungseffizienz nachhaltig.

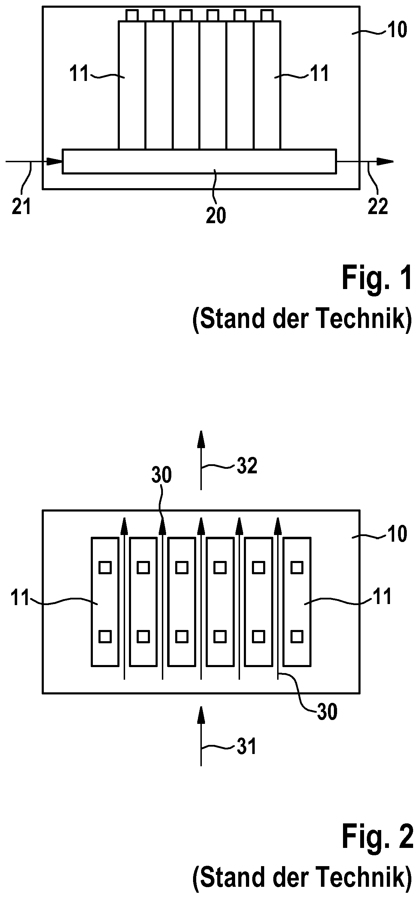

Eine weitere Option zur Sicherstellung der Zelltemperierung stellt die direkte Luftkühlung dar, bei der Kabinenluft direkt an den Lithium-Ionen-Zellen vorbeigeführt wird und den in den Zellen entstehenden Wärmestrom konvektiv aufnimmt. Gerade bei leistungsoptimierten HEV Zellen (HEV = Hybrid Electric Vehicle) kann der in der Regel mäßige Wärmeübergangskoeffizient durch die, verglichen mit der Bodenkühlung, große Seitenflächen kompensiert werden. Fig. 1 und 2 zeigen schematisch die beschriebenen unterschiedlichen Kühlvarianten. In Fig. 1 ist die Kühlung von Zellen 11 einer Lithium-Ionen Batterie 10 mittels einer fluiddurchströmten Platte 20 dargestellt. Das Kühlfluid wird der Platte 20 zugeführt, siehe Bezugszeichen 21, und an der anderen Seite der Platte 20 entzogen, siehe Bezugszeichen 22. Fig. 2 zeigt eine Lithium-Ionen Batterie 10 mit einer Vielzahl von Zellen 11. Durch die Zellen wird Kühlluft 30 zur Kühlung der Zellen 5 hindurchgeführt. Die Kühlluft 30 tritt an einer Seite in die Lithium-Ionen Batterie 10 ein, siehe Bezugszeichen 31, und an der gegenüberliegenden Seite aus der Lithium-Ionen Batterie 10 aus, siehe Bezugszeichen 32.

Nachteilig bei der direkten Luftkühlung ist jedoch die schlechte Wärmeaufnahmefähigkeit, d. h. das Produkt aus Volumenstrom und spezifischer Wärmekapazität der Zellen, bedingt durch den limitierten Volumenstrom bei Verwendung von Kabinenluft (ca. 170 m³/h). Dies führt verglichen mit einer Wasserkühlung zu deutlich größeren Temperaturerhöhungen des Kühlmediums. Diese hohe Temperaturspreizung wirkt sich nachteilig auf die Temperaturhomogenität des Batteriepacks aus. Bei allen Kühlverfahren, die mit einem Mediumsstrom arbeiten ergibt sich prinzipbedingt ein Temperaturgefälle zwischen Zellen, die am Anfang des Mediumsstroms liegen, und Zellen, die am Ende dieses Mediumstroms liegen. Dies ist unabhängig vom Kühlmedium (Luft, Wasser, Kältemittel) und allein der Tatsache geschuldet, dass das Kühlmedium Wärme von den Zellen aufnimmt, sich dadurch aufheizt und dadurch an Kühlleistung verliert.

Weiterhin ist die Alterung von Zellen von der Zelltemperatur abhängig. In erster grober Näherung geht man davon aus, dass bei Temperaturen über 30°C eine Temperaturerhöhung von 10°C eine Halbierung der Lebensdauer nach sich zieht.

Das oben beschriebene Temperaturgefälle sorgt zusammen mit dem Alterungsverhalten dazu, dass die wärmeren Zellen am Ende des Mediumstroms schneller altern und als erstes ihre Lebensdauer erreichen. Die Lebensdauer eines Batteriepacks wird daher direkt von den wärmsten Zellen bestimmt.

Die DE 10 2008 012 705 B4 offenbart eine Vorrichtung und ein Verfahren zur Temperierung einer Batterie, insbesondere einer Lithium-Ionen-Batterie. Zur Kühlung der Zellen der Batterie kann die Batterie in einem sogenannten Umlaufbetrieb betrieben werden. Es erfolgt keine aktive Frischluftzufuhr in das Gehäuse der Batterie, sondern die bereits in dem Gehäuse befindliche Luft innerhalb des Gehäuses wird zirkuliert.

Weiterhin offenbart die Druckschrift EP 2 067 640 A1 eine Kühlvorrichtung und ein Verfahren zum Homogenisieren der Temperaturverteilung in den Zellen einer Batterie eines elektrischen Fahrzeuges mit einer Gebläseeinheit zur Förderung von Kühlluft aus einem Innenraum eines Kraftfahrzeuges über eine Luftzuleitung durch eine Batterie zur Kühlung der selbigen. Temperatursensoren messen dabei Temperaturen einzelner Batteriezellen und leiten die gemessenen Werte an eine Regeleinheit weiter, welche eine Temperaturdifferenz zwischen einzelnen Batteriezellen feststellt und bei Überschreiten einer bestimmten Temperaturdifferenz ein Signal zur Erhöhung der Förderleistung der Gebläseeinheit an diese sendet.

### OFFENBARUNG DER ERFINDUNG

Aufgabe der Erfindung ist es, die Temperaturspreizung in direkt luftgekühlten Zellen einer Lithium-Ionen-Batterie, insbesondere eines Lithium-Ionen-Batteriepacks, für ein Kraftfahrzeug zu homogenisieren und die Lebensdauer einer derartigen Lithium-Ionen-Batterie zu erhöhen. Insbesondere ist ein homogenes Alterungsverhalten einer Lithium-Ionen-Batterie beziehungsweise eines Lithium-Ionen-Batteriepacks für ein Kraftfahrzeug anzustreben.

Die voranstehende Aufgabe wird gelöst durch ein Verfahren zum Homogenisieren der Temperaturverteilung in den Zellen einer Lithium-Ionen-Batterie für ein Kraftfahrzeug mit den Merkmalen des unabhängigen Anspruchs 1 sowie durch eine Lithium-Ionen-Batterie für ein Kraftfahrzeug mit den Merkmalen des Anspruchs 7. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Lithium-Ionen-Batterie und jeweils umgekehrt, sodass bezüglich der Offenbarung zu den einzelnen Erfindungsaspekten stets wechselseitig Bezug genommen wird beziehungsweise werden kann.

Erfindungsgemäß wird die Aufgabe durch ein Verfahren zum Homogenisieren der Temperaturverteilung in den Zellen einer Lithium-Ionen-Batterie für ein Kraftfahrzeug gelöst, wobei das Verfahren nachfolgende Verfahrensschritte aufweist:
a) Zur Kühlung der Zellen der Lithium-Ionen-Batterie wird durch ein Gebläse Kühlluft aus einem Innenraum des Kraftfahrzeuges in eine Luftzuleitung angesaugt, von der Luftzuleitung durch die Lithium-Ionen-Batterie gefördert, wobei die Kühlluft an den nacheinander angeordneten Zellen vorbeigeführt wird, und über eine Luftableitung in den Innenraum zurückgeführt,
b) über Temperatursensoren werden die Temperaturverhältnisse in den Zellen festgestellt und einer Regeleinheit weitergeleitet,
c) in der Regeleinheit wird die Temperaturdifferenz zwischen einer ersten Zelle und einer zweiten Zelle festgestellt, wobei die erste Zelle näher an der Luftzuleitung angeordnet ist als die zweite Zelle,
d) bei Feststellung einer Temperaturdifferenz oberhalb einer Grenztemperaturdifferenz durch die Regeleinheit schaltet die Regeleinheit ein Wegeventil, welches zwischen dem Innenraum und dem Gebläse in der Luftzuleitung angeordnet ist, derart, dass weniger oder keine Kühlluft mehr aus dem Innenraum angesaugt wird und, dass Umluft aus einer Rückführleitung, die zwischen dem Wegeventil und der Luftableitung angeordnet ist, und die die Luftableitung und das Wegeventil fluidkommunizierend verbindet, über die Luftzuleitung durch die Lithium-Ionen-Batterie gefördert wird,
e) sendet zur Erhöhung der Luftförderleistung des Gebläses ein Signal an das Gebläse und
f) die Regeleinheit bei Feststellung des Überschreitens einer bestimmten mittleren Betriebstemperatur der Lithium-Ionen-Batterie das Wegeventil derart schaltet, dass das Gebläse sowohl Kühlluft aus dem Innenraum des Kraftfahrzeuges als auch Umluft aus der Rückführleitung ansaugt und durch die Lithium-Ionen-Batterie fördert.

Ein erfindungsgemäßes Verfahren ermöglicht ein Homogenisieren der Temperaturspreizung in den luftgekühlten Zellen einer Lithium-Ionen-Batterie beziehungsweise eines Lithium-Ionen-Batteriepacks für ein Kraftfahrzeug. Durch das Verfahren kann die Lebensdauer einer Lithium-Ionen-Batterie erhöht beziehungsweise eines Lithium-Ionen-Batteriepacks werden. Insbesondere wird ein homogenes Alterungsverhalten einer Lithium-Ionen-Batterie beziehungsweise eines Lithium-Ionen-Batteriepacks durch das Verfahren ermöglicht.

Die Lithium-Ionen-Batterie ist derart ausgebildet, dass die Luftdurchfuhr durch die Zellen der Lithium-Ionen-Batterie sowohl mittels Kühlluft aus dem Innenraum des Kraftfahrzeuges als auch durch einen Umluftbetrieb erfolgen kann. Die Temperatursensoren und die Regeleinheit ermöglichen in Abhängigkeit der Temperaturverhältnisse eine unterschiedliche Luftzufuhr durch die Zellen der Lithium-Ionen-Batterie in den Zellen der Lithium-Ionen-Batterie.

Im normalen Zustand werden die Zellen der Lithium-Ionen-Batterie durch Kühlluft aus dem Innenraum des Kraftfahrzeuges gekühlt. Das Gebläse saugt Kühlluft aus dem Innenraum des Kraftfahrzeuges an und fördert diese durch die Luftzuleitung und durch die Lithium-Ionen-Batterie. Anschließend wird die erwärmte Luft über die Luftableitung zurück in den Innenraum des Kraftfahrzeuges geführt. Ist das Kraftfahrzeug ein Cabrio, stellt im Sinne der Erfindung der freie Raum einen Innenraum im Sinne eines geschlossenen Kraftfahrzeuges dar. Im Betrieb des Kraftfahrzeuges kommt es zu einem unterschiedlichen Temperaturanstieg in den einzelnen Zellen der Lithium-Ionen-Batterie. Dies kommt dadurch, dass die ersten Zellen durch die eintretende Kühlluft besser gekühlt werden als die hinteren Zellen. Die ersten Zellen geben Wärme an die eintretende Kühlluft ab, sodass diese erwärmte Kühlluft die hinteren Zellen schlechter kühlen kann. Dadurch kommt es zu der Temperaturspreizung in den Zellen der Lithium-Ionen-Batterie. Die Zellen der Lithium-Ionen-Batterie sind hintereinander angeordnet, wobei die erste Zelle einem Lufteinlass für die Kühlluft zugewandt ist und die letzte Zelle einem Luftauslass für die erwärmte Kühlluft.

Nach der Durchführung der Kühlluft durch die Lithium-Ionen-Batterie werden die Temperaturverhältnisse in den Zellen der Lithium-Ionen-Batterie durch Temperatursensoren festgestellt und an eine Regeleinheit weitergeleitet. D. h., dass zumindest die Temperatur der ersten und der letzten Zelle der Zellen der Lithium-Ionen-Batterie gemessen werden. Hierfür können mehrere Temperatursensoren vorgesehen sein. Bevorzugt werden die Temperaturen aller Zellen gemessen und an die Regeleinheit weitergeleitet. Die Regeleinheit wertet die Temperaturen aus und vergleicht die Temperaturen der Zellen miteinander. Insbesondere wird die Temperaturdifferenz ΔT zwischen der ersten Zelle und der letzten Zelle der Lithium-Ionen-Batterie ermittelt. Liegt die Temperaturdifferenz ΔT zwischen der ersten und der letzten Zelle oberhalb einer Grenztemperaturdifferenz, beispielsweise mehr als 5K, dann schaltet die Regeleinheit das Wegeventil, welches insbesondere ein 3/2-Wegeventil ist. Mit der normalen Kühlluft aus dem Innenraum des Kraftfahrzeuges können die Zellen der Lithium-Ionen-Batterie nicht weiter gekühlt werden. Die über das Gebläse durch die Lithium-Ionen-Batterie geförderte Kühlluft reicht nicht mehr aus, um eine Temperaturspreizung in der Lithium-Ionen-Batterie zu verhindern. Dies liegt in dem begrenzten Kühlluftvolumenstrom, den das Gebläse ansaugen und weiterleiten darf. Das Gebläse kann nur einen bestimmten Kühlluftvolumenstrom, beispielsweise nicht mehr als 170m³/h aus dem Innenraum des Kraftfahrzeuges ansaugen. Ein höherer Kühlluftvolumenstrom würde dazu führen, dass ein Unterdruck in dem Innenraum des Kraftfahrzeuges entsteht. Ferner würde der Innenraum zu stark aufheizen und die Geräusche würden zunehmen. Daher schaltet die Regeleinheit das Wegeventil derart, dass entweder nur noch Umluft aus der Rückführleitung angesaugt und erneut durch die Lithium-Ionen-Batterie gefördert wird, oder dass ein Teil Kühlluft aus dem Innenraum des Kraftfahrzeuges und ein Teil Umluft aus der Rückführleitung von dem Gebläse angesaugt wird. Gleichzeitig kann die Gebläseleistung erhöht werden, da allenfalls nur noch ein Teil Kühlluft angesaugt wird. Bevorzugt wird vollständig auf Umluftbetrieb umgeschaltet, sodass nur noch Luft aus der Rückführleitung angesaugt und zur Lithium-Ionen-Batterie gefördert wird. Im Umluftbetrieb wird die Luft durch das Gebläse in einem geschlossenen Kreislauf durch die Luftzuleitung, die Lithium-Ionen-Batterie, die Abluftleitung und die Rückführleitung gefördert. Durch den geschlossenen Kreislauf ist es möglich die Förderleistung des Gebläses deutlich zu erhöhen im Vergleich zu der maximalen Förderleistung des Gebläses bei reiner Kühlluftansaugung aus dem Innenraum des Kraftfahrzeuges.

Das heißt, für den Fall, dass eine Homogenisierung der Batterietemperatur erforderlich wird, kann der Luftvolumenstrom bei 100% Umluftbetrieb deutlich über 170 m³/h erhöht werden, ohne dass es zu Komfortbeeinträchtigungen in dem Innenraum des Kraftfahrzeuges, d. h. der Fahrgastzelle, kommt. Zur Schaltung des Wegeventils sendet die Regeleinheit ein Steuersignal an das Wegeventil. Gleichzeitig sendet die Regeleinheit ein Signal an das Gebläse zur Erhöhung der Förderleistung des Gebläses.

Im reinen Umluftbetrieb wird die mittlere Batterietemperatur einerseits steigen, da die in dem geschlossenen Kreislauf geführte Luft sich immer mehr erwärmt. Andererseits tritt aufgrund der höheren Fließgeschwindigkeit der Luft durch die Lithium-Ionen-Batterie ein Vergleichmäßigungseffekt der Temperaturen der einzelnen Zellen der Lithium-Ionen-Batterie ein. Um wieder Wärme abzuführen, muss die Umlaufrate reduziert und erneut Kühlluft aus dem Innenraum des Kraftfahrzeuges angesaugt und der Lithium-Ionen-Batterie zugeführt werden.

Besonders bevorzugt ist daher ein Verfahren, bei dem die Regeleinheit in Abhängigkeit der Temperaturverhältnisse in den Zellen die Stellung des Wegeventils zwischen einem vollständigen Verschließen der Luftzuleitung zu dem Innenraum des Kraftfahrzeuges und einem damit verbundenen vollständigen Öffnen der Rückführleitung (Umluftbetrieb) und einem vollständigen Öffnen der Luftzuleitung zu dem Innenraum des Kraftfahrzeuges und einem vollständigen Verschließen der Rückführleitung (Kabinenluftbetrieb), insbesondere stufenlos, variiert. Vorzugsweise findet eine permanente Regelung des Wegeventils und des Gebläses statt und damit eine abwechselnde oder gleichzeitige Förderung von Kühlluft aus dem Innenraum des Kraftfahrzeuges und der Umluft aus der Rückführleitung. Hierdurch ist eine gute Homogenisierung der Temperaturspreizung der luftgekühlten Zellen einer Lithium-Ionen-Batterie beziehungsweise eines Lithium-Ionen-Batteriepacks für ein Kraftfahrzeug möglich. Die Lebensdauer der Lithium-Ionen-Batterie beziehungsweise des Lithium-Ionen-Batteriepacks kann erhöht und ein homogenes Alterungsverhalten der Lithium-Ionen-Batterie beziehungsweise eines Lithium-Ionen-Batteriepacks erreicht werden.

Das Wegeventil kann stufenartig verstellt werden. Im reinen Kabinenluftbetrieb sperrt das Wegeventil die Rückführleitung, sodass nur Kühlluft aus dem Innenraum des Kraftfahrzeuges angesaugt werden kann. Im einen Umluftbetrieb sperrt das Wegeventil die Luftzuleitung zu dem Innenraum, sodass nur Umluft durch das Gebläse gefördert werden kann. Die Rückführleitung zweigt von der Abluftleitung ab. D. h. vorzugsweise weist die Abluftleitung einen Abzweig für die Rückführleitung auf. Der Abzweig kann eine reine Gabelung in der Abluftleitung sein. Es ist auch möglich, dass der Abzweig ein Wegeventil, wie ein 3/2-Wegeventil, ist. Durch den Unterdruck, den das Gebläse im Umluftbetrieb erzeugt, wird die aus der Lithium-Ionen-Batterie ausgetretene Luft wieder in die Rückführleitung gesaugt, sodass keine beziehungsweise kaum Luft in den Innenraum des Kraftfahrzeuges strömt.

Erfindungsgemäß ist bei einem Verfahren vorgesehen, dass die Regeleinheit bei Feststellung des Überschreitens einer bestimmten mittleren Betriebstemperatur der Lithium-Ionen-Batterie das Wegeventil derart schaltet, dass das Gebläse sowohl Kühlluft aus dem Innenraum des Kraftfahrzeuges als auch Umluft aus der Rückführleitung ansaugt und durch die Lithium-Ionen-Batterie fördert. Das Wegeventil kann eine Klappe aufweisen, die durch die Regeleinheit gesteuert werden kann.

Bevorzugt ist ein Verfahren, bei dem die Regeleinheit in Abhängigkeit der mittleren Betriebstemperatur der Lithium-Ionen-Batterie durch Steuerung des Wegeventils das Verhältnis der Kühlluftansaugung aus dem Innenraum des Kraftfahrzeuges zu der Umluftansaugung aus der Rückführleitung variiert, vorzugsweise stufenlos variiert, wobei mit zunehmender mittlerer Betriebstemperatur der Lithium-Ionen-Batterie der Anteil der Kühlluftansaugung zunimmt. Mit zunehmender mittlerer Betriebstemperatur beim Umluftbetrieb nimmt die Temperaturdifferenz zwischen der ersten und der letzten Zelle der Lithium-Ionen-Batterie ab. Es erfolgt somit eine Homogenisierung der Temperaturen der Zellen der Lithium-Ionen-Batterie. Überschreitet die mittlere Betriebstemperatur der Lithium-Ionen-Batterie, d. h. die Temperatur über alle Zellen gemittelt, eine bestimmte mittlere Grenztemperatur, so wird mehr Kühlluft angesaugt und mit einer reduzierten Förderleistung des Gebläses durch die Lithium-Ionen-Batterie gefördert. Im reinen Kabinenluftbetrieb fördert das Gebläse maximal 170 m³/h Kühlluft aus dem Innenraum des Kraftfahrzeuges.

Bevorzugt ist ein Verfahren, bei dem die Förderrichtung der Luft durch die Lithium-Ionen-Batterie durch das Gebläse umgekehrt, insbesondere periodisch, umkehrt, wird. Dadurch kann sichergestellt werden, dass im Kabinenluftbetrieb Kühlluft zuerst der letzten Zelle der Lithium-Ionen-Batterie zugeführt wird. Gleiches erfolgt im Umluftbetrieb. Hierdurch ist eine besonders gute Homogenisierung der Temperaturverteilung in den Zellen der Lithium-Ionen-Batterie möglich. Die Umkehr der Förderrichtung der Luft wird vorzugsweise von der Temperaturdifferenz zwischen der ersten und der letzten Zelle der Lithium-Ionen-Batterie abhängig gemacht.

Ferner kann bei einem Verfahren vorgesehen sein, dass ein zweites Gebläse in der Luftzuleitung zwischen dem Innenraum des Kraftfahrzeuges und dem Wegeventil angeordnet ist, über das Kühlluft aus dem Innenraum des Kraftfahrzeuges angesaugt, von der Luftzuleitung durch die Lithium-Ionen-Batterie gefördert und über eine Luftableitung in den Innenraum zurückgeführt wird, wobei das zweite Gebläse und das "erste" Gebläse alternierend von der Regeleinheit angesteuert werden. So kann das zweite Gebläse für den reinen Kabinenluftbetrieb eingesetzt werden, währen das "erste" Gebläse für den Umluftbetrieb eingesetzt wird.

Gemäß einem zweiten Aspekt der Erfindung wird die Aufgabe durch eine Lithium-Ionen-Batterie für ein Kraftfahrzeug gelöst. Die Lithium-Ionen-Batterie weist wenigstens zwei Zellen, eine Luftzuleitung zur Verbindung eines Innenraumes des Kraftfahrzeuges mit einem Lufteinlass der Lithium-Ionen-Batterie, ein Gebläse in der Luftzuleitung, eine Luftableitung zur Verbindung eines Luftauslasses der Lithium-Ionen-Batterie mit dem Innenraum des Kraftfahrzeuges, ein Wegeventil in der Luftzuleitung, eine Rückführleitung zwischen der Luftableitung und dem Wegeventil zur Rückführung von Luft in die Lithium-Ionen-Batterie, wenigstens einen Temperatursensor zur Feststellung der Temperaturverhältnisse in den Zellen und eine Regeleinheit zur Regelung des Wegeventils und/oder des Gebläses in Abhängigkeit der von dem wenigstens einen Temperatursensor festgestellten Temperaturverhältnissen in den Zellen, wobei das Wegeventil in wenigstens zwei Positionen und das Gebläse in zumindest zwei Leistungsstufen einstellbar sind, auf. Die erfindungsgemäße Lithium-Ionen-Batterie ist dadurch gekennzeichnet, dass sie zur Durchführung eines Verfahrens gemäß dem ersten Aspekt der Erfindung, insbesondere nach einem der Ansprüche 1 bis 6, ausgebildet ist.

Eine derartige Lithium-Ionen-Batterie ermöglicht ein Homogenisieren der Temperaturspreizung in den luftgekühlten Zellen der Lithium-Ionen-Batterie beziehungsweise eines Lithium-Ionen-Batteriepacks für ein Kraftfahrzeug. Die Lebensdauer einer derartigen Lithium-Ionen-Batterie beziehungsweise eines Lithium-Ionen-Batteriepacks kann erhöht werden. Insbesondere weist eine derartige Lithium-Ionen-Batterie ein homogenes Alterungsverhalten auf. Die Temperaturverteilung in der Lithium-Ionen-Batterie kann durch den wahlweisen Umluftbetrieb und Kabinenluftbetrieb relativ gleich gehalten werden, sodass diese gleichmäßig belastet wird.

Das Wegeventil kann beliebig ausgestaltet sein. Entscheidend ist, dass das Wegeventil zum reinen Kabinenluftbetrieb die Rückführleitung sperrt, zum reinen Umluftbetrieb die Luftzuleitung zu dem Innenraum des Kraftfahrzeuges sperrt und im gemischten Betrieb eine beliebige Stellung dazwischen einnehmen kann. Bevorzugt ist das Wegeventil ein 3/2-Wegeventil.

Besonders bevorzugt ist eine Lithium-Ionen-Batterie, bei der das Wegeventil und/oder das Gebläse stufenlos verstellbar sind. Insbesondere ist bevorzugt, wenn eine stufenlose Erhöhung der Förderleistung des Gebläses an die Zunahme der Umluftrate der Luft gekoppelt ist. D. h., je höher der Anteil der angesaugten Umluft aus der Rückführleitung ist, desto höher kann die Förderleistung des Gebläses eingestellt werden.

Besonders bevorzugt ist ferner eine Lithium-Ionen-Batterie, die derart ausgebildet ist, dass bei einer reinen Kühlluftansaugung aus dem Innenraum des Kraftfahrzeuges das Gebläse eine maximale Luftförderleistung von 170 m³/h hat, und dass bei einer reinen Umluftansaugung aus der Rückführleitung das Gebläse eine Luftförderleistung von mindestens 170 m³/h, insbesondere bis 1000 m³/h hat. Je höher die Luftförderleistung des Gebläses bei dem Umluftbetrieb ist, desto besser ist der Vergleichmäßigungseffekt der Temperaturen in den Zellen der Lithium-Ionen-Batterie.

Die Lithium-Ionen-Batterie ermöglicht eine deutliche Erhöhung des durch die Lithium-Ionen-Batterie geführten Luftstroms gegenüber konventionellen Verfahren. Diese konventionellen Verfahren sind auf max. 170 m³/h begrenzt, falls Kabinenluft zur Batteriekühlung eingesetzt wird. Die Steigerung des Luftvolumenstroms führt zu einer geringeren Temperaturspreizung zwischen Eintritts- und Austrittstemperatur der Förderluft und damit zwangsläufig auch zu einer Vergleichsmäßigung der Batterietemperaturverteilung. Mithilfe des Wegeventils kann die Strömungsführung variabel gewählt werden. Im konventionellen Betrieb wird Kabinenluft, begrenzt auf beispielsweise 170 m³/h, verwendet, die über das Gebläse in die Lithium-Ionen-Batterie gespeist wird. Das Ventil kann nach Bedarf so geschaltet werden, dass die Lithium-Ionen-Batterie in einen variablen Umlaufbetrieb geschaltet wird. Für den Fall, dass eine Homogenisierung der Batterietemperatur erforderlich wird, kann der Luftvolumenstrom bei 100% Umluftbetrieb auf deutlich über 170 m³/h erhöht werden, ohne dass es zu Komfortbeeinträchtigungen in der Fahrgastzelle des Kraftfahrzeuges kommt. Im reinen Umluftbetrieb wird die mittlere Batterietemperatur einerseits steigen. Andererseits tritt ein Vergleichsmäßigungseffekt ein. Um die Wärme abzuführen, muss die Umlaufrate wieder reduziert und Kühlluft aus der Fahrgastzelle des Kraftfahrzeuges der Lithium-Ionen-Batterie zugeführt werden. Als Regelstrategie könnte in einer einfachen Version als Regeleinheit ein Zweipunktregler eingesetzt werden, der bei einer gewissen Temperaturdifferenz, z. B. 5 K, zwischen erster und letzter Zelle den Umluftbetrieb auf 100% setzt. Steigt die mittlere Batterietemperatur der Lithium-Ionen-Batterie über einen kritischen, variablen Wert an, wird die Umluftrate schrittweise reduziert und mehr Kühlluft aus der Fahrgastzelle des Kraftfahrzeuges angesaugt.

### BEVORZUGTES AUSFÜHRUNGSBEISPIEL

Die erfindungsgemäße Lithium-Ionen-Batterie und eine Weiterbildung werden nachfolgend anhand der Zeichnungen näher erläutert. Es zeigen jeweils schematisch:
- Fig. 1: eine mittels einer Kühlplatte gekühlte Lithium-Ionen-Batterie gemäß dem Stand der Technik,
- Fig. 2: eine luftgekühlte Lithium-Ionen-Batterie gemäß dem Stand der Technik,
- Fig. 3: eine luftgekühlte Lithium-Ionen-Batterie, die gemäß dem erfindungsgemäßen Prinzip ausgebildet ist,
- Fig. 4: die luftgekühlte Lithium-Ionen-Batterie gemäß Fig. 3 in einem reinen Kabinenluftbetrieb,
- Fig. 5: die luftgekühlte Lithium-Ionen-Batterie gemäß Fig. 3 in einem reinen Umluftbetrieb und
- Fig. 6: eine alternative luftgekühlte Lithium-Ionen-Batterie, die gemäß dem erfindungsgemäßen Prinzip ausgebildet ist.

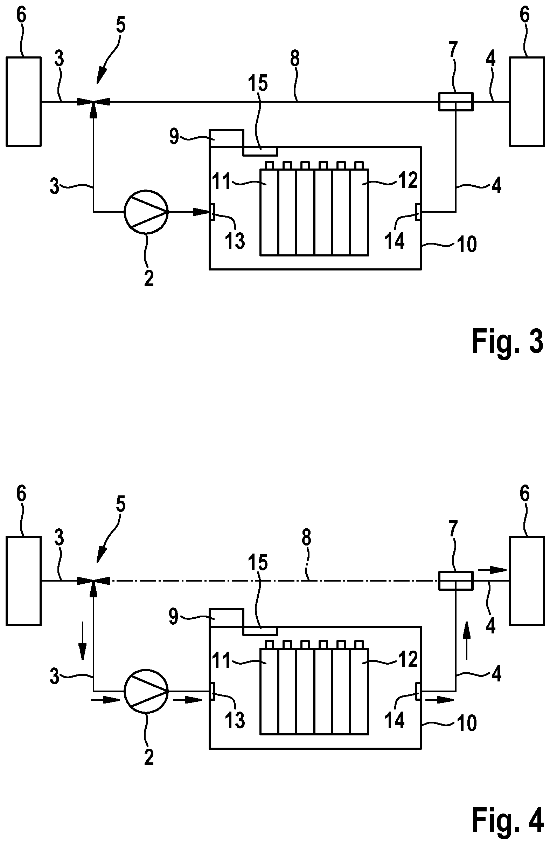

Elemente mit gleicher Funktion und Wirkungsweise sind in den Figuren 3 bis 6 mit denselben Bezugszeichen versehen.

In Figur 3 ist schematisch eine Lithium-Ionen-Batterie 10 für ein Kraftfahrzeug dargestellt. Die Lithium-Ionen-Batterie 10 weist eine Vielzahl von nebeneinander angeordneten Zellen 11, 12 auf. Die erste Zelle, die einem Lufteinlass 13 der Lithium-Ionen-Batterie 10 zugewandt ist, ist mit Bezugszeichen 11 versehen, die letzte Zelle, die einem Luftauslass 14 der Lithium-Ionen-Batterie 10 zugewandt ist, ist mit Bezugszeichen 12 versehen. Die Lithium-Ionen-Batterie 10 weist ferner eine Luftzuleitung 3 zur Verbindung eines Innenraumes 6 eines Kraftfahrzeuges mit dem Lufteinlass 13 der Lithium-Ionen-Batterie 10 auf. Des Weiteren weist die Lithium-Ionen-Batterie 10 ein Gebläse 2 in der Luftzuleitung 3, eine Luftableitung 4 zur Verbindung 4 des Luftauslasses 14 der Lithium-Ionen-Batterie 10 mit dem Innenraum 6 des Kraftfahrzeuges und ein Wegeventil 5 in der Luftzuleitung 3 auf. Von der Luftableitung 4 führt eine Rückführleitung 8 zu dem Wegeventil 5 zur Rückführung von Luft in die Lithium-Ionen-Batterie 10. Ferner weist die Lithium-Ionen-Batterie 10 Temperatursensoren 15 zur Feststellung der Temperaturverhältnisse in den Zellen 11, 12 und eine Regeleinheit 9 zur Regelung des Wegeventils 5 und/oder des Gebläses 2 in Abhängigkeit der von den Temperatursensoren 15 festgestellten Temperaturverhältnisse in den Zellen 11, 12 auf, wobei das Wegeventil 5 in wenigstens zwei Positionen und das Gebläse 2 in zumindest zwei Leistungsstufen einstellbar sind.

Zu Beginn des Betriebs der Lithium-Ionen-Batterie 10 weisen die Zellen 11, 12 eine niedrige Betriebstemperatur auf. Mit zunehmender Dauer des Betriebs der Lithium-Ionen-Batterie 10 steigt die Temperatur in den Zellen 11, 12. Zur Kühlung der Zellen 11, 12 wird über das Gebläse 2 Kühlluft aus einem Innenraum 6 des Kraftfahrzeuges angesaugt und über die Luftzuleitung 3 zur Lithium-Ionen-Batterie 10 gefördert. Die Kühlluft tritt durch den Lufteinlass 13 in die Lithium-Ionen-Batterie 10 ein und trifft dort zuerst auf die erste Zelle 11. Daher wird die erste Zelle 11 stärker gekühlt als die letzte Zelle 12, sodass es mit zunehmender Betriebsdauer zu einer Temperaturspreizung in den Zellen 11, 12 der Lithium-Ionen-Batterie 10 kommt. Die Temperatursensoren 15 stellen die Temperaturverhältnisse in den Zellen 11, 12 fest und leiten die Ergebnisse an die Regeleinheit 9 der Lithium-Ionen-Batterie 10 weiter. In der Regeleinheit 9 wird die Temperaturdifferenz ΔT zwischen der ersten Zelle 11 und der zweiten Zelle 12 festgestellt. Stellt die Regeleinheit 9 fest, dass die Temperaturdifferenz ΔT zwischen der ersten Zelle 11 und der zweiten Zelle 12 oberhalb einer Grenztemperaturdifferenz, beispielsweise größer 5 K, ist, schaltet die Regeleinheit 9 das Wegeventil 5 derart, dass entweder weniger oder keine Kühlluft mehr aus dem Innenraum 6 des Kraftfahrzeuges angesaugt wird und, dass Umluft aus der Rückführleitung 8, die zwischen dem Wegeventil 5 und der Luftableitung 4 angeordnet ist, und die die Luftableitung 4 und das Wegeventil 5 fluidkommunizierend verbindet, angesaugt wird. Das heißt, die Lithium-Ionen-Batterie 10 schaltet teilweise oder ganz auf Umluftbetrieb um, bei dem die Luft in einem geschlossenen Kreislauf durch die Lithium-Ionen-Batterie 10 gefördert wird. Da der Umluftbetrieb nicht begrenzt ist, wie der Kantinenluftbetrieb, sendet die Regeleinheit 9 ein Signal an das Gebläse 2, sodass dieses seine Luftvolumenstromförderleistung deutlich erhöht.
Durch das Variieren der Luftzuführung, das heißt das Umschalten zwischen Kantinenluftbetrieb und Umluftbetrieb, wird ein Homogenisieren der Temperaturspreizung in den luftgekühlten Zellen 11, 12 der Lithium-Ionen-Batterie 10 erreicht. Die Lebensdauer der Lithium-Ionen-Batterie 10 ist erhöht beziehungsweise das Alterungsverhalten der Lithium-Ionen-Batterie 10 ist homogenisiert.

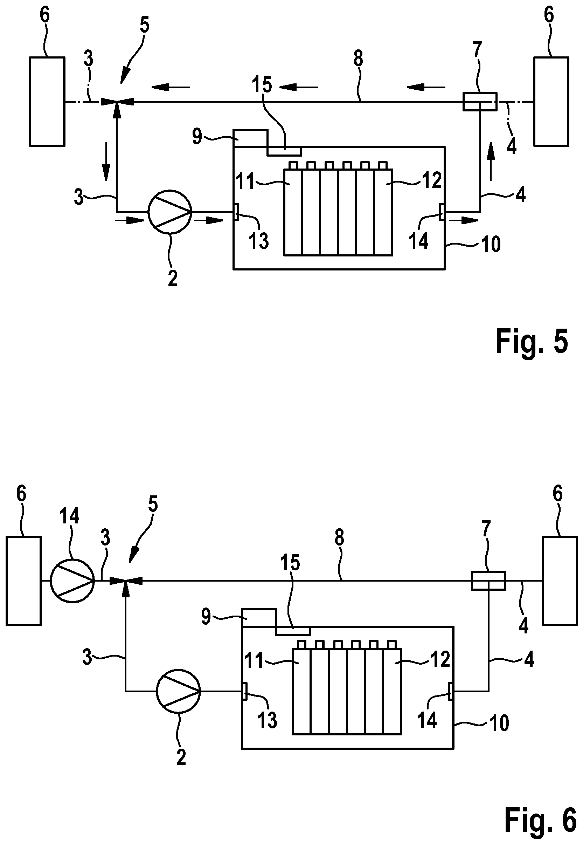

Figur 4 zeigt den reinen Kantinenluftbetrieb der Lithium-Ionen-Batterie 10, während Fig. 5 den reinen Umluftbetrieb zeigt.

Figur 6 zeigt eine alternative Lithium-Ionen-Batterie 10. Im Unterschied zu der Lithium-Ionen-Batterie 10 gemäß den Figuren 3 bis 5 weist die alternative Lithium-Ionen-Batterie 10 ein zweites Gebläse 14 auf. Dieses zweite Gebläse 14 ist in der Luftzuleitung 3 zwischen dem Wegeventil 5 und dem Innenraum 6 des Kraftfahrzeuges angeordnet und dient zur Ansaugung von Kühlluft aus dem Innenraum 6 des Kraftfahrzeuges. Das zweite Gebläse 14 wird dann von der Regeleinheit 9 eingeschaltet, wenn die Lithium-Ionen-Batterie 10 im reinen Kantinenluftbetrieb betrieben wird. Soll auf reinen Umluftbetrieb umgeschaltet werden, schaltet die Regeleinheit 9 das zweite Gebläse 14 aus und das "erste" Gebläse 2 an.

Generell kann lediglich eine einfache Abzweigung 7 in Form einer Gabelung dort vorgesehen sein, wo die Rückführleitung 8 von der Abluftleitung 4 abzweigt. Es ist auch denkbar, dass dort ein Wegeventil, beispielsweise ein 3/2-Wegeventil, angeordnet ist, welches von der Regeleinheit 9 entsprechend angesteuert werden kann.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren zum Homogenisieren der Temperaturverteilung in den Zellen (11, 12) einer Lithium-Ionen-Batterie (10) für ein Kraftfahrzeugaufweisend nachfolgende Verfahrensschritte:
a) Zur Kühlung der Zellen (11, 12) der Lithium-Ionen-Batterie (10) wird durch ein Gebläse (2) Kühlluft aus einem Innenraum (6) des Kraftfahrzeuges in eine Luftzuleitung (3) angesaugt, von der Luftzuleitung (3) durch die Lithium-Ionen-Batterie (10) gefördert, wobei die Kühlluft an den nacheinander angeordneten Zellen (11, 12) vorbeigeführt wird, und über eine Luftableitung (4) in den Innenraum (6) zurückgeführt,
b) über Temperatursensoren (15) werden die Temperaturverhältnisse in den Zellen (11, 12) festgestellt und einer Regeleinheit (9) weitergeleitet,
c) in der Regeleinheit (9) wird die Temperaturdifferenz (ΔT) zwischen einer ersten Zelle (11) und der zweiten Zelle (12) festgestellt, wobei die erste Zelle (11) näher an der Luftzuleitung (3) angeordnet ist als die zweite Zelle (12),
d) bei Feststellung einer Temperaturdifferenz (ΔT) oberhalb einer Grenztemperaturdifferenz durch die Regeleinheit (9) schaltet die Regeleinheit (9) ein Wegeventil (5), welches zwischen dem Innenraum (6) und dem Gebläse (2) in der Luftzuleitung (3) angeordnet ist, derart, dass weniger oder keine Kühlluft mehr aus dem Innenraum (6) angesaugt wird und dass Umluft aus einer Rückführleitung (8), die zwischen dem Wegeventil (5) und der Luftableitung (4) angeordnet ist und die die Luftableitung (4) und das Wegeventil (5) fluidkommunizierend verbindet, über die Luftzuleitung (3) durch die Lithium-Ionen-Batterie (10) gefördert wird, und
e) sendet zur Erhöhung der Luftförderleistung des Gebläses (2) ein Signal an das Gebläse (2),
**dadurch gekennzeichnet, dass**
f) die Regeleinheit (9) bei Feststellung des Überschreitens einer bestimmten mittleren Betriebstemperatur der Lithium-Ionen-Batterie (10) das Wegeventil (5) derart schaltet, dass das Gebläse (2) sowohl Kühlluft aus dem Innenraum (6) des Kraftfahrzeuges als auch Umluft aus der Rückführleitung (8) ansaugt und durch die Lithium-Ionen-Batterie (10) fördert.

2. Verfahren nach Anspruch 1, **dadurch gekennzeichnet, dass** die Regeleinheit (9) in Abhängigkeit der Temperaturverhältnisse in den Zellen (11, 12) die Stellung des Wegeventils (5) zwischen einem vollständigen Verschließen der Luftzuleitung (3) zu dem Innenraum (6) des Kraftfahrzeuges und einem damit verbundenen vollständigen Öffnen der Rückführleitung (8) (Umluftbetrieb) und einem vollständigen Öffnen der Luftzuleitung (3) zu dem Innenraum (6) des Kraftfahrzeuges und einem vollständigen Verschließen der Rückführleitung (8) (Kabinenluftbetrieb), insbesondere stufenlos, variiert.

3. Verfahren nach einem der vorhergehenden Ansprüche, **dadurch gekennzeichnet, dass** die Regeleinheit (9) in Abhängigkeit der mittleren Betriebstemperatur der Lithium-Ionen-Batterie (10) durch Steuerung des Wegeventils (5) das Verhältnis der Kühlluftansaugung aus dem Innenraum (6) des Kraftfahrzeuges zu der Umluftansaugung aus der Rückführleitung (8) variiert, vorzugsweise stufenlos variiert, wobei mit zunehmender mittlerer Betriebstemperatur der Lithium-Ionen-Batterie (10) der Anteil der Kühlluftansaugung zunimmt.

4. Verfahren nach einem der vorhergehenden Ansprüche, **dadurch gekennzeichnet, dass** das Gebläse (2) maximal 170 m³/h Kühlluft aus dem Innenraum (6) des Kraftfahrzeuges fördert.

5. Verfahren nach einem der vorhergehenden Ansprüche, **dadurch gekennzeichnet, dass** das Gebläse (2) die Förderrichtung der Luft durch die Lithium-Ionen-Batterie (10) umkehrt, insbesondere periodisch umkehrt.

6. Verfahren nach einem der vorhergehenden Ansprüche, **dadurch gekennzeichnet, dass** ein zweites Gebläse (14) in der Luftzuleitung (3) zwischen dem Innenraum (6) des Kraftfahrzeuges und dem Wegeventil (5) angeordnet ist, über das Kühlluft aus dem Innenraum (6) des Kraftfahrzeuges angesaugt, von der Luftzuleitung (3) durch die Lithium-Ionen-Batterie (10) gefördert und über eine Luftableitung (4) in den Innenraum (6) zurückgeführt wird, wobei das zweite Gebläse (14) und das Gebläse (2) alternierend von der Regeleinheit angesteuert werden.

7. Kraftfahrzeug, aufweisend eine Lithium-Ionen-Batterie mit wenigstens zwei Zellen (11, 12), eine Luftzuleitung (3) zur Verbindung eines Innenraumes (6) des Kraftfahrzeuges mit einem Lufteinlass (13) der Lithium-Ionen-Batterie (10), ein Gebläse (2) in der Luftzuleitung (3), eine Luftableitung (4) zur Verbindung (4) eines Luftauslasses (14) der Lithium-Ionen-Batterie (10) mit dem Innenraum (6) des Kraftfahrzeuges, ein Wegeventil (5) in der Luftzuleitung (3), eine Rückführleitung (8) zwischen der Luftableitung (4) und dem Wegeventil (5) zur Rückführung von Luft in die Lithium-Ionen-Batterie (10), wenigstens einen Temperatursensor (15) zur Feststellung der Temperaturverhältnisse in den Zellen (11, 12) und eine Regeleinheit (9) zur Regelung des Wegeventils (5) und/oder des Gebläses (2) in Abhängigkeit der von dem wenigstens einen Temperatursensor (15) festgestellten Temperaturverhältnissen in den Zellen (11, 12), wobei das Wegeventil (5) in wenigstens zwei Positionen und das Gebläse (2) in zumindest zwei Leistungsstufen einstellbar sind, wobei die Regeleinheit (9) bei Feststellung des Überschreitens einer bestimmten mittleren Betriebstemperatur der Lithium-Ionen-Batterie (10) das Wegeventil (5) derart schaltet, dass das Gebläse (2) sowohl Kühlluft aus dem Innenraum (6) des Kraftfahrzeuges als auch Umluft aus der Rückführleitung (8) ansaugt und durch die Lithium-Ionen-Batterie (10) fördert.

8. Kraftfahrzeug nach Anspruch 7, **dadurch gekennzeichnet, dass** das Wegeventil (5) ein 3/2-Wegeventil ist.

9. Kraftfahrzeug nach Anspruch 7 oder 8, **dadurch gekennzeichnet, dass** das Wegeventil (5) und/oder das Gebläse (2) stufenlos verstellbar sind.

10. Kraftfahrzeug nach einem der Ansprüche 7, 8 oder 9, **dadurch gekennzeichnet, dass** die Lithium-Ionen-Batterie (10) derart ausgebildet ist, dass bei einer reinen Kühlluftansaugung aus dem Innenraum (6) des Kraftfahrzeuges das Gebläse (2) eine maximale Luftförderleistung von 170 m³/h hat, und dass bei einer reiner Umluftansaugung aus der Rückführleitung (8) das Gebläse (2) eine Luftförderleistung von mindestens 170 m³/h, insbesondere bis 1000 m³/h hat.

## Claims

1. Method for homogenizing the temperature distribution in the cells (11, 12) of a lithium ion battery (10) for a motor vehicle having the following method steps:
a) in order to cool the cells (11, 12) of the lithium ion battery (10) cooling air is sucked into an air inlet line (3) from a passenger compartment (6) of the motor vehicle through a blower (2), fed from the air inlet line (3) through the lithium ion battery (10), wherein the cooling air is conducted past the cells (11, 12) which are arranged in succession, and via an air outlet line (4) into the passenger compartment (6),
b) by means of temperature sensors (15) the temperature conditions in the cells (11, 12) are detected and passed on to a regulating unit (9),
c) in the regulating unit (9) the temperature difference (ΔT) between a first cell (11) and the second cell (12) is detected, wherein the first cell (11) is arranged closer to the air inlet line (3) than the second cell (12),
d) when a temperature difference (ΔT) above a limiting temperature difference is detected by the regulating unit (9), the regulating unit (9) switches a directional control valve (5), arranged between the passenger compartment (6) and the blower (2), in the air inlet line (3), in such a way that less cooling air or no cooling air is sucked in from the passenger compartment (6) any more, and in that recirculation air from a return line (8) which is arranged between the directional control valve (5) and the air outlet line (4) and which connects the air outlet line (4) and the directional control valve (5) in a fluid-communicating fashion is fed via the air inlet line (3) through the lithium ion battery (10), and
e) transmits a signal to the blower (2) to increase the air feed capacity of the blower (2),
**characterized in that**
f) when it is detected that a determined average operating temperature of the lithium ion battery (10) is exceeded, the regulating unit (9) switches the directional control valve (5) in such a way that the blower (2) sucks in both cooling air from the passenger compartment (6) of the motor vehicle and recirculation air from the return line (8) and feeds it through the lithium ion battery (10).

2. Method according to Claim 1, **characterized in that** the regulating unit (9) varies the position of the directional control valve (5) between complete closing of the air inlet line (3) to the passenger compartment (6) of the motor vehicle and associated complete opening of the return line (8) (circulation mode) and complete opening of the air inlet line (3) to the passenger compartment (6) of the motor vehicle and complete closing of the return line (8) (cabin air mode), in particular in an infinitely variable fashion, as a function of the temperature conditions in the cells (11, 12).

3. Method according to one of the preceding claims, **characterized in that** the regulating unit (9) varies, preferably varies in an infinitely variable fashion, the ratio of the cooling air intake from the passenger compartment (6) of the motor vehicle to the circulation air intake from the return line (8) as a function of the average operating temperature of the lithium ion battery (10) by controlling the directional control valve (5), wherein as the average operating temperature of the lithium ion battery (10) increases the proportion of cooling air intake increases.

4. Method according to one of the preceding claims, **characterized in that** the blower (2) feeds at maximum 170 m³/h cooling air from the passenger compartment (6) of the motor vehicle.

5. Method according to one of the preceding claims, **characterized in that** the blower (2) reverses, in particular reverses periodically, the feeding direction of the air through the lithium ion battery (10).

6. Method according to one of the preceding claims, **characterized in that** a second blower (14) is arranged in the air inlet line (3) between the passenger compartment (6) of the motor vehicle and the directional control valve (5), by means of which second blower (14) cooling air is sucked in from the passenger compartment (6) of the motor vehicle, is fed from the air inlet line (3) through the lithium ion battery (10) and is fed back via an air outlet line (4) into the passenger compartment (6), wherein the second blower (14) and the blower (2) are actuated alternately by the regulating unit.

7. Motor vehicle having a lithium ion battery with at least two cells (11, 12), an air inlet line (3) for connecting a passenger compartment (6) of the motor vehicle to an air inlet (13) of the lithium ion battery (10), a blower (2) in the air inlet line (3), an air outlet line (4) for connecting (4) an air outlet (14) of the lithium ion battery (10) to the passenger compartment (6) of the motor vehicle, a directional control valve (5) in the air inlet line (3), a return line (8) between the air outlet line (4) and the directional control valve (5) for feeding back air into the lithium ion battery (10), at least one temperature sensor (15) for detecting the temperature conditions in the cells (11, 12), and a regulating unit (9) for regulating the directional control valve (5) and/or the blower (2) as a function of the temperature conditions detected in the cells (11, 12) by the at least one temperature sensor (15), wherein the directional control valve (5) can be set to at least two positions and the blower (2) can be set to at least two power stages, wherein when it is detected that a determined average operating temperature of the lithium ion battery (10) is exceeded, the regulating unit (9) switches the directional control valve (5) in such a way that the blower (2) sucks in both cooling air from the passenger compartment (6) of the motor vehicle and circulation air from the return line (8) and feeds it through the lithium ion battery (10).

8. Motor vehicle according to Claim 7, **characterized in that** the directional control valve (5) is a 3/2-way valve.

9. Motor vehicle according to Claim 7 or 8, **characterized in that** the directional control valve (5) and/or the blower (2) can be adjusted in an infinitely variable fashion.

10. Motor vehicle according to one of Claims 7, 8 or 9, **characterized in that** the lithium ion battery (10) is embodied in such a way that in the case of a pure cooling air intake from the passenger compartment (6) of the motor vehicle the blower (2) has a maximum air feed capacity of 170 m³/h, and **in that** in the case of pure circulation intake from the return line (8) the blower (2) has an air feed capacity of at least 170 m³/h, in particular up to 1000 m³/h.

## Revendications

1. Procédé d'homogénéisation de la distribution de la température dans les cellules (11, 12) d'une batterie aux ions de lithium (10) pour un véhicule automobile, comprenant les étapes suivantes :
a) pour le refroidissement des cellules (11, 12) de la batterie aux ions de lithium (10), de l'air de refroidissement est aspiré par un ventilateur (2) depuis un espace intérieur (6) du véhicule automobile dans une conduite d'arrivée d'air (3), transporté par la conduite d'arrivée d'air (3) à travers la batterie aux ions de lithium (10), l'air de refroidissement étant amené à passer au niveau des cellules (11, 12) disposées les unes après les autres, puis renvoyé dans l'espace intérieur (6) par le biais d'une conduite d'évacuation d'air (4),
b) les conditions de température dans les cellules (11, 12) sont déterminées par le biais de sondes de température (15) et retransmises à une unité de régulation (9),
c) la différence de température (ΔT) entre une première cellule (11) et la deuxième cellule (12) est déterminée dans l'unité de régulation (9), la première cellule (11) étant disposée plus proche de la conduite d'arrivée d'air (3) que la deuxième cellule (12),
d) en cas de constatation d'une différence de température (ΔT) supérieure à une différence de température limite par l'unité de régulation (9), l'unité de régulation (9) commute un distributeur (5) qui est disposé dans la conduite d'arrivée d'air (3) entre l'espace intérieur (6) et le ventilateur (2) de telle sorte que moins ou pas du tout d'air de refroidissement est aspiré depuis l'espace intérieur (6) et en ce que l'air ambiant en provenance d'une conduite de retour (8), laquelle est disposée entre le distributeur (5) et la conduite d'évacuation d'air (4) et relie en communication fluidique la conduite d'évacuation d'air (4) et le distributeur (5), est transporté par le biais de la conduite d'arrivée d'air (3) à travers la batterie aux ions de lithium (10), et
e) envoie un signal au ventilateur (2) en vue d'accroître la capacité de débit d'air du ventilateur (2),
**caractérisé en ce que**
f) en cas de constatation du dépassement d'une température de fonctionnement moyenne définie de la batterie aux ions de lithium (10), l'unité de régulation (9) commute le distributeur (5) de telle sorte que le ventilateur (2) aspire à la fois de l'air de refroidissement depuis l'espace intérieur (6) du véhicule automobile et de l'air ambiant depuis la conduite de retour (8) et le transporte à travers la batterie aux ions de lithium (10).

2. Procédé selon la revendication 1, **caractérisé en ce que** l'unité de régulation (9) fait varier la position du distributeur (5) en fonction des conditions de température dans les cellules (11, 12) entre une fermeture complète de la conduite d'arrivée d'air (3) vers l'espace intérieur (6) du véhicule automobile avec une ouverture complète qui lui est associée de la conduite de retour (8) (mode air ambiant) et une ouverture complète de la conduite d'arrivée d'air (3) vers l'espace intérieur (6) du véhicule automobile avec une fermeture complète de la conduite de retour (8) (mode air d'habitacle), en particulier en continu.

3. Procédé selon l'une des revendications précédentes, **caractérisé en ce que** l'unité de régulation (9) fait varier, de préférence en continu, le rapport entre l'aspiration d'air de refroidissement depuis l'espace intérieur (6) du véhicule automobile et l'aspiration d'air ambiant depuis la conduite de retour (8) en fonction de la température de fonctionnement moyenne de la batterie aux ions de lithium (10) en commandant le distributeur (5), la part d'aspiration d'air de refroidissement augmentant à mesure que la température de fonctionnement moyenne de la batterie aux ions de lithium (10) augmente.

4. Procédé selon l'une des revendications précédentes, **caractérisé en ce que** le ventilateur (2) débite un maximum de 170 m³/h d'air de refroidissement depuis l'espace intérieur (6) du véhicule automobile.

5. Procédé selon l'une des revendications précédentes, **caractérisé en ce que** le ventilateur (2) inverse le sens de transport de l'air à travers la batterie aux ions de lithium (10), notamment l'inverse périodiquement.

6. Procédé selon l'une des revendications précédentes, **caractérisé en ce qu'**un deuxième ventilateur (14) est disposé dans la conduite d'arrivée d'air (3) entre l'espace intérieur (6) du véhicule automobile et le distributeur (5), par le biais duquel de l'air de refroidissement est aspiré depuis l'espace intérieur (6) du véhicule automobile, transporté par la conduite d'arrivée d'air (3) à travers la batterie aux ions de lithium (10) et renvoyé dans l'espace intérieur (6) par le biais d'une conduite d'évacuation d'air (4), le deuxième ventilateur (14) et le ventilateur (2) étant commandés en alternance par l'unité de régulation.

7. Véhicule automobile, qui possède une batterie aux ions de lithium comprenant au moins deux cellules (11, 12), une conduite d'arrivée d'air (3) destinée à relier un espace intérieur (6) du véhicule automobile à une entrée d'air (13) de la batterie aux ions de lithium (10), un ventilateur (2) dans la conduite d'arrivée d'air (3), une conduite d'évacuation d'air (4) destinée à relier (4) une sortie d'air (14) de la batterie aux ions de lithium (10) à l'espace intérieur (6) du véhicule automobile, un distributeur (5) dans la conduite d'arrivée d'air (3), une conduite de retour (8) entre la conduite d'évacuation d'air (4) et le distributeur (5) pour renvoyer de l'air dans la batterie aux ions de lithium (10), au moins une sonde de température (15) destiné à déterminer les conditions de température dans les cellules (11, 12) et une unité de régulation (9) destinée à réguler le distributeur (5) et/ou le ventilateur (2) en fonction des conditions de température dans les cellules (11, 12) déterminées par l'au moins une sonde de température (15), le distributeur (5) pouvant être réglé dans au moins deux positions et le ventilateur (2) à au moins deux niveaux de puissance, l'unité de régulation (9), en cas de constatation du dépassement d'une température de fonctionnement moyenne définie de la batterie aux ions de lithium (10), commutant le distributeur (5) de telle sorte que le ventilateur (2) aspire à la fois de l'air de refroidissement depuis l'espace intérieur (6) du véhicule automobile et de l'air ambiant depuis la conduite de retour (8) et le transporte à travers la batterie aux ions de lithium (10).

8. Véhicule automobile selon la revendication 7, **caractérisé en ce que** le distributeur (5) est un distributeur à 3/2 voies.

9. Véhicule automobile selon la revendication 7 ou 8, **caractérisé en ce que** le distributeur (5) et/ou le ventilateur (2) peuvent être réglés en continu.

10. Véhicule automobile selon l'une des revendications 7, 8 ou 9, **caractérisé en ce que** la batterie aux ions de lithium (10) est configurée de telle sorte que lors d'une pure aspiration d'air de refroidissement depuis l'espace intérieur (6) du véhicule automobile, le ventilateur (2) possède une capacité de débit d'air maximale de 170 m³/h et **en ce que** lors d'une pure aspiration d'air ambiant depuis la conduite de retour (8), le ventilateur (2) possède une capacité de débit d'air minimale de 170 m³/h, pouvant notamment atteindre 1000 m³/h.
